# EUROPÄISCHE PATENTANMELDUNG

(11) **EP 3 757 193 A1**
(43) Veröffentlichungstag der Anmeldung: **30.12.2020**
(21) Anmeldenummer: 20178422.0
(22) Anmeldetag: 05.06.2020
(51) Int. Cl.: C10B 53/02, B01D 53/22, C02F 11/10, C10J 3/00, C01B 3/50, B01D 71/02, C10B 57/16

(54) **VERFAHREN UND ANLAGE ZUR AUFARBEITUNG VON KLÄRSCHLAMM, GÄRRESTEN UND/ODER GÜLLE UNTER GEWINNUNG VON WASSERSTOFF**

(30) Priorität: 11.06.2019 DE 102019115711
(71) Anmelder: Hydrogen Prozess Technik GbR, 27367 Ahausen (DE); A.H.T. Syngas Technology N.V., 51491 Overath (DE); 4 Innovation GmbH, 29640 Schneverdingen (DE)
(72) Erfinder: FERGES, Gero, 51766 Engelskirchen (DE); MAHNKEN, Claus-Lüder, 27367 Ahausen (DE); MAHNKEN, Lorenz, 27367 Ahausen (DE); LORENZEN, Hinrich, 24966 Sörup (DE); LORENZEN, Matz, 24966 Sörup (DE); RECK, Siegfried Dr., 31582 Nienburg (DE); BLANK, Ralf, 27367 Ahausen (DE); RÖHRS, Stephan, 29640 Schneverdingen (DE); DOROW, Volker, 29640 Schneverdingen (DE); BAUTSCH, Class Rainer, 29640 Schneverdingen (DE); VORWERK, Eckhard, 29640 Schneverdingen (DE)
(74) Vertreter: Gramm, Lins & Partner Patent- und Rechtsanwälte PartGmbB

(57) **Zusammenfassung**

In einem ersten Aspekt richtet sich die vorliegende Erfindung auf ein Verfahren zur Aufarbeitung von Klärschlamm, Gärresten und/oder Gülle unter Gewinnung von Wasserstoff, dieses Verfahren umfasst die Schritte der Bereitstellung von Klärschlamm, Gärresten und/oder Gülle mit gegebenenfalls vorheriger Trocknung hiervon; Pyrolyse des trockenen Klärschlammes, der trockenen Gärreste und/oder der trockenen Gülle in einem Pyrolysereaktor zur Erzeugung von Pyrolysegas enthaltend Wasserstoff; Führen des erhaltenen, enthaltenden Pyrolysegases zu einem Wasserstoffabscheider; Abtrennen von Wasserstoff in dem Wasserstoffabscheider, wobei dieser Wasserstoffabscheider einer ist mit einer semipermeablen Trennwand mit ferritischem Eisen oder Roheisen oder Reineisen zwischen dem primären Bereich mit dem Pyrolysegas und dem sekundären, Wasserstoff angereicherten Bereich. In einem weiteren Aspekt betrifft die vorliegende Erfindung eine Anlage zur Aufarbeitung von Klärschlamm, Gärresten und/oder Gülle insbesondere zur Durchführung des erfindungsgemäßen Verfahrens mit einer ersten Einrichtung zur Aufarbeitung des Klärschlammes, einem Pyrolysereaktor, einem Wasserstoffabscheider mit einem semipermeablen Material wobei dieses semipermeable Material eines ist, das ferritisches Eisen und/oder Roheisen und/oder Reineisen umfasst. Schließlich wird die Verwendung von Klärschlamm, Gärresten und/oder Gülle zur Gewinnung von hochreinem Wasserstoff beschrieben.

## Beschreibung

In einem ersten Aspekt richtet sich die vorliegende Erfindung auf ein Verfahren zur Aufarbeitung von Klärschlamm, Gärresten und/oder Gülle unter Gewinnung von Wasserstoff, dieses Verfahren umfasst die Schritte der Bereitstellung von Klärschlamm, Gärresten und/oder Gülle mit gegebenenfalls vorheriger Trocknung hiervon; Pyrolyse des trockenen Klärschlammes, der trockenen Gärreste und/oder der trockenen Gülle in einem Pyrolysereaktor zur Erzeugung von Pyrolysegas enthaltend Wasserstoff; Führen des erhaltenen, enthaltenden Pyrolysegases zu einem Wasserstoffabscheider; Abtrennen von Wasserstoff in dem Wasserstoffabscheider, wobei dieser Wasserstoffabscheider einer ist mit einer semipermeablen Trennwand mit ferritischem Eisen oder Roheisen oder Reineisen zwischen dem primären Bereich mit dem Pyrolysegas und dem sekundären, Wasserstoff angereicherten Bereich. In einem weiteren Aspekt betrifft die vorliegende Erfindung eine Anlage zur Aufarbeitung von Klärschlamm, Gärresten und/oder Gülle insbesondere zur Durchführung des erfindungsgemäßen Verfahrens mit einer ersten Einrichtung zur Aufarbeitung des Klärschlammes, einem Pyrolysereaktor, einem Wasserstoffabscheider mit einem semipermeablen Material wobei dieses semipermeable Material eines ist, das ferritisches Eisen und/oder Roheisen und/oder Reineisen umfasst. Schließlich wird die Verwendung von Klärschlamm, Gärresten und/oder Gülle zur Gewinnung von hochreinem Wasserstoff beschrieben.

Wasserstoff findet immer mehr Aufmerksamkeit als Energieträger in verschiedensten Bereichen. Wasserstoff wird eine maßgebliche Rolle in der dritten der "grünen" industriellen Revolution zugeschrieben. Da Wasserstoff ein Energieträger und keine Energiequelle ist, muss Wasserstoff entsprechend erzeugt werden. Wasserstoff eröffnet dabei die unterschiedlichsten Möglichkeiten für u.a. eine regenerative, nachhaltige Mobilität. Brennstoffzellen mit Wasserstoff als Energieträger können vielfältig eingesetzt werden, sowohl im Mobilitätsbereich als auch in anderen Bereichen unter Nutzung von Verbrennungskraftmaschinen zur Erzeugung von Energie und Wärme. Darüber hinaus eignet sich Wasserstoff hervorragend als Möglichkeit Energie zu speichern und zu transportieren. Brennwert und Heizwert von Wasserstoff ist auf die Masse bezogen im Vergleich mit anderen Brennstoffen außergewöhnlich hoch. Wasserstoff wird eine große Rolle als sekundärer Energieträger zugeschrieben und als Schlüsselelement in der Energiewirtschaft gesehen, um eine Abkehr von fossilen Energieträgern zu ermöglichen.

Die Gewinnung bzw. Herstellung von Wasserstoff ist auf unterschiedlichen Wegen möglich. Wasserstoff als Energieträger lässt sich dann durch Verbrennung in Wasser umsetzen.

Wie ausgeführt, lässt sich Wasserstoff auf verschiedene Weisen herstellen. So stellt ein übliches Verfahren die Dampfreformierung und partielle Oxidation dar. Dazu werden Kohlenwasserstoffe wie Methan oder Methanol dampfreformiert, d.h. es wird ein wasserdampfhaltiges Synthesegas erhalten durch Zugabe von Wasserdampf zu Methan und Zuführung von Wärme. Synthesegas enthält Wasserstoff und Kohlenmonoxid, welches weiter zu Kohlendioxid umgesetzt werden kann, wobei weiterer Wasserstoff erzeugt wird. Allerdings hat die Wasserstoffherstellung aus Erdgas oder anderen fossilen Kohlenwasserstoffen den Nachteil, dass man abhängig von fossilen Energieträgern bleibt und die CO₂-Bilanz nicht den heutigen Anforderungen genügt.

Darüber hinaus wird die Vergasung von Biomasse als eine zukünftige, wichtige Quelle von Wasserstoff angesehen. Hier sind allerdings noch umfangreiche Entwicklungen notwendig, da Biomasse eine komplexe uneinheitliche chemische Zusammensetzung aufweist und entsprechend die Gewinnung von Synthesegas schwierig ist. Darüber hinaus ist Synthesegas eine Mischung verschiedener Gase, dieses erfordert zusätzlich den weiteren Schritt der Abtrennung von Wasserstoff vom Synthesegas bzw. Rohgas.

Eine Alternative zur Herstellung von Wasserstoff ist die Elektrolyse, hierbei wird mit Hilfe elektrischer Energie Wasserstoff und Sauerstoff durch Elektrolyse aus Wasser hergestellt. Allerdings ist hier die Energiebilanz nicht so, dass eine industrielle Umsetzung sinnvoll ist.

Es wird weiterhin spekuliert, dass Wasserstoff direkt aus Wasser durch Zufuhr von Wärme erzeugt werden kann, also eine thermische Wasserspaltung. Hierzu sind allerdings sehr hohe Temperaturen von über 2500°C erforderlich, die Trennverfahren von generierten Wasserstoff und Sauerstoff sind ebenfalls schwierig. Auch biologische Prozesse zur Wasserstoffgenerierung werden überlegt, z.B. unter Einsatz von Mikroorganismen mit Hydrogenasen, die ein Erzeugen von Wasserstoff erlauben. Auch das Interesse zur Herstellung von Wasserstoff aus Biomasse findet immer mehr Interesse. Allerdings stellt sich hier das Problem der Trennung und Aufarbeitung der Biomasse zur Gewinnung von hochreinem Wasserstoff.

Die DE 10 2010 049 792 A1 beschreibt ein Kleinkraftwerk sowie Verfahren und Vorrichtung zur Gewinnung von hochreinem Wasserstoff. Dort wird hochreines Wasserstoff aus dem Pyrolysegas gewonnen, wobei als semipermeables Trennmaterial, das die Abtrennung des hochreinen Wasserstoffes von Pyrolysegas erlaubt, ein allein für Wasserstoff durchlässiges semipermeables Trennmaterial ist insbesondere eines das ferritisches Eisen, Roheisen oder Reineisen umfasst.

Die DE 10 2012 109 154 B4 beschreibt ein Verfahren zur Gewinnung von Wasserstoff und stellt eine Weiterentwicklung der oben genannten DE 10 2010 049 792 A1 dar. Hier konnte gezeigt werden, dass ein kurzzeitiges Aktivieren ausreichend ist, die Menge an durchtretendem Wasserstoffgas durch eine semipermeable Membran umfassend Eisen ausreichend ist, die Abscheidung des Wasserstoffes aus einem Rohgas zu erlauben.

Die DE 37 18 133 A1 betrifft ein Verfahren zum Konvertieren von Klärschlamm-Filterkuchen durch Pyrolyse zu Öl, Gas und Koks sowie eine zugehörige Anlage. Die Entwässerung des Filterkuchens erfolgt zweistufig mit einer Voreindampfung oder Vortrockung und einer Resteindampfung. Die Wärmezufuhr erfolgt bei einer Temperatur von beispielsweise 850°C.

Die EP 0 417 343 A1 offenbart ein Verfahren zur Pyrolyse von Klärschlamm und/oder anderen organischen Abfällen, bei dem die Rohgutaufgabe über einen chargenweise beschickten Vortrockner getrocknet und in einen Pyrolysator eingebracht wird. Dort wird das Gut in horizontal verlaufenden Schichten umgelenkt und in einen Pyrolyseraum überführt.

Der DE 10 2015 016 194 A1 ist ein Verfahren zur hydrothermalen Karbonisierung und Faulung von Klärschlamm zu entnehmen, wobei der Klärschlamm wechselweise durch eine Karbonisierungsvorrichtung und eine Faulungsvorrichtung geführt wird.

Üblicherweise wird ein palladiumenthaltendes Material zur Abscheidung von Wasserstoff aus Gasgemischen verwendet. Palladium ist allerdings ein sehr teures Material, dessen großindustrieller Einsatz wirtschaftlich nicht möglich ist.

### Beschreibung der Erfindung

Aufgabe der vorliegenden Erfindung ist die Bereitstellung von Verfahren zur Gewinnung von hochreinem Wasserstoff, wobei ein zusätzlicher Ressourcenverbrauch möglichst gering ist. Dabei soll insbesondere auch eine möglichst geringe Belastung durch Abgase und Verbrennungsrückstände erfolgen. Insbesondere sollten weder schädliche organische Rückstände entstehen noch die CO₂-Bilanz aber auch die Kohlenmonoxid-Bilanz unzureichend sein.

Die vorliegende Aufgabe wird erfindungsgemäß mit einem Verfahren gemäß Anspruch 1 zur Aufarbeitung von Klärschlamm, Gärresten und/oder Gülle unter Gewinnung von Wasserstoff gelöst. Nämlich, erfindungsgemäß wird ein Verfahren zur Aufarbeitung von Klärschlamm, Gärresten und/oder Gülle unter Gewinnung von Wasserstoff umfassend die Schritte:
- Bereitstellen von Klärschlamm, Gärresten und/oder Gülle mit gegebenenfalls vorheriger Trocknung hiervon;
- Pyrolyse des trockenen Klärschlammes, der trockenen Gärreste und/oder der trockenen Gülle in einem Pyrolysereaktor zur Erzeugung von Pyrolysegas enthaltend Wasserstoff;
- Führen des erhaltenen, Wasserstoff enthaltenden Pyrolysegases zu einem Wasserstoffabscheider mit einem Primärbereich und einem Sekundärbereich;
- Abtrennen von Wasserstoff in den Wasserstoffabscheider, wobei dieser Wasserstoffabscheider einer ist mit einer semipermeablen Trennwand mit ferritischem Eisen und/oder Roheisen und/oder Reineisen zwischen dem primären Bereich mit dem Pyrolysegas und dem sekundären, Wasserstoff angereicherten Bereich.

In einem weiteren Aspekt wird eine Anlage zur Aufarbeitung von Klärschlamm , Gärresten und/oder Gülle, insbesondere zur Durchführung eines Verfahrens nach einem der Ansprüche 1 bis 9 mit einer ersten Einrichtung zur Aufarbeitung des Klärschlammes, der Gärreste und/oder der Gülle auf ein Material mit mindestens 80 % Trockenmasse, wie mindestens 90 % Trockenmasse, ggf. mit einer Karbonisierungseinheit des Materials; einem Pyrolysereaktor zur Pyrolyse des getrockneten und ggf. karbonisierten Klärschlammes, Gärrest und/oder Gülle zur Erzeugung von Pyrolysegas; einem Wasserstoffabscheider mit einem semipermeablen Material als Trennwand das zwischen dem primären Pyrolysegas des enthaltenden Bereichs und dem sekundären Wasserstoff angereicherten Bereich angeordnet ist, wobei dieses semipermeable Material eines ist, das ferritisches Eisen und/oder Roheisen und/oder Reineisen umfasst, bevorzugt aus ferritischem Eisen und/oder Roheisen und/oder Reineisen besteht bereitgestellt.

Schließlich betrifft die vorliegende Anmeldung die Verwendung von Klärschlamm, Gärresten und/oder Gülle zur Gewinnung von hochreinem Wasserstoff, insbesondere mit einem Wasserstoffabscheider mit einem semipermeablen Material als Trennwand zwischen dem primären Bereich enthaltend wasserstoffhaltiges Gas und dem sekundären Bereich mit Wasserstoff angereichertem Gas.

### Ausführliche Beschreibung

In einem ersten Aspekt wird ein Verfahren zur Aufarbeitung von Klärschlamm , Gärresten und/oder Gülle unter Gewinnung von Wasserstoff umfassend die Schritte:
- Bereitstellen von Klärschlamm, Gärresten und/oder Gülle mit gegebenenfalls vorheriger Trocknung hiervon;
- Pyrolyse des trockenen Klärschlammes, der trockenen Gärreste und/oder der trockenen Gülle in einem Pyrolysereaktor zur Erzeugung von Pyrolysegas enthaltend Wasserstoff;
- Führen des erhaltenen, Wasserstoff enthaltenden Pyrolysegases zu einem Wasserstoffabscheider;
- Abtrennen von Wasserstoff in den Wasserstoffabscheider, wobei dieser Wasserstoffabscheider einer ist mit einer semipermeablen Trennwand mit ferritischem Eisen und/oder Roheisen und/oder Reineisen zwischen dem primären Bereich mit dem Pyrolysegas und dem sekundären, Wasserstoff angereicherten Bereich bereitgestellt.

Unter Klärschlamm, Gärresten und/oder Gülle wird vorliegend verstanden Gewässer und Schlämme, die z.B. im Bereich der anaeroben Vergärungsanlagen mit dem Zweck der Biogaserzeugung, der Verwertung von Bioabfällen oder der Abfallbehandlung anfallen. Der Ausdruck "Klärschlamm, Gärreste und/oder Gülle" umfasst daher insbesondere Gärreste aus Biogas-, Schlammfaulungs-, oder Vergärungsanlagen sowie Güllelägern. Dieser Klärschlamm, Gärreste und/oder Gülle stammen z.B. aus kommunalen Abwässern, Gülle aus der Landwirtschaft. Obwohl diese Zusammensetzungen wertvolle Rohstoffe enthalten, ist die bisherige Lagerung und Aufarbeitung gesetzlich vorgeschrieben.

Üblicherweise wird versucht durch Eindampfungsprozesse eine Konzentrierung und gegebenenfalls Abtrennung problematischer Bestandteile zu erreichen. Die bisherige Verwertung von Klärschlamm besteht aus einer Verbringung in getrockneter Form auf landwirtschaftliche Ackerflächen oder als Komponente der Abfallwirtschaft als Deponiegut oder als Zusatzstoffe in der Müllverbrennung. Probleme sind die umweltschädlichen Reste im Boden und in der Luft. Gesetze verbieten die Ausbringung auf Ackerflächen und die Verbrennung bereitet Probleme mit der Einhaltung von Schadstoffemissionsgrenzen. Aktuell ist hier insbesondere der Stickstoffgehalt dieser Komponenten problematisch. Mit Hilfe des erfindungsgemäßen Verfahrens ist es möglich diese Problemstoffe Klärschlamm, Gärreste und Gülle in wertvolle Rohstoffe umzuwandeln und somit eine umweltfreundliche nachhaltige Umwandlung dieser Problemstoffe zu erreichen. Dies ist insbesondere unter Berücksichtigung der Ressourcenschonung und der Umweltbelastung zu betrachten.

Erfindungsgemäß wird unter dem Ausdruck "Pyrolyse" die thermisch-chemische Spaltung von organischen Verbindungen bei sehr hoher Temperatur ohne zusätzliche oder mit eingeschränkter Sauerstoffzuführung verstanden. Eine Pyrolyse erfolgt dabei bei einer Temperatur von mindestens 950°C, wie mindestens 1000°C, wie mindestens 1100°C, z. B. mindestens über 1200°C, wie im Bereich von über 1200°C bis 1400°C.

Unter dem Ausdruck "Pyrolysegas" wird verstanden: Niedermolekulares Gas, das brennbar ist und üblicherweise Kohlenmonoxid, Kohlendioxid, Wasserstoff, Stickstoff und Sauerstoff sowie Methan enthält.

Tatsächlich ist die Prozesstemperatur während der Pyrolyse so hoch, z.B. in einem Bereich von 1100°C bis 1400°C, wie von über 1200°C, z. B. über 1200°C bis 1400°C, das im Wesentlichen die meisten organischen Verbindungen zersetzt werden und somit problematische Verbindungen, wie Dioxin etc. zersetzt werden unter Ausbildung von im Wesentlichen harmlosen Produkten wie Asche und Stickstoff und Kohlenstoffgase, sowie Wasserstoff und Wasser. Unter anderem umfassen die Pyrolyseprodukte im Pyrolysegas Methangas, Kohlenmonoxid, Kohlendioxid, Wasserstoff, und Stickstoff sowie Asche. Diese Asche kann dabei vorhandene Halogene enthalten, die durch Zusatz von Kalk zum Klärschlamm gebunden werden.

Es wurde festgestellt, dass eine Aufarbeitung des Klärschlammes, von Gärresten und/oder Gülle unter Gewinnung von Wasserstoff, insbesondere hochreinem Wasserstoff mit dem erfindungsgemäßen Verfahren möglich ist, wobei hochreiner Wasserstoff durch einen Wasserstoffabscheider mit einer semipermeablen Trennwand mit ferritischem Eisen und/oder Roheisen und/oder Reineisen zwischen dem primären Bereich mit dem Pyrolysegas und dem sekundären Wasserstoff angereicherten Bereich liegend möglich ist. Durch den Schritt der Pyrolyse des trockenen Klärschlammes, der trockenen Gärreste und/oder der trockenen Gülle in einem Pyrolysereaktor wird ein Pyrolysegas mit einem verwertbaren Anteil Wasserstoff hergestellt. Mit Hilfe des Wasserstoffabscheiders der beschriebenen Art ist es möglich, Wasserstoff hochrein in großer Menge von dem Pyrolysegas abzutrennen. Das Pyrolysegas kann dann weiteren Behandlungen unterworfen werden, gleiches gilt für die während des Pyrolysegases erhaltenen Asche. In einer Ausführungsform ist dabei das Verfahren zum Abtrennen von Wasserstoff in dem Wasserstoffabscheider eines, wie in der DE 10 2010 049 792 A1 beschrieben. Insbesondere ist das Verfahren eines, wie in der DE 10 2012 109 154 B4 beschrieben.

Die semipermeable Trennwand ist eine mit ferritischem Eisen und/oder Roheisen und/oder Reineisen. In einer Ausführungsform besteht die semipermeable Trennwand aus ferritischem Eisen und/oder Roheisen und/oder Reineisen.

Bevorzugt findet dabei Reineisen Verwendung, wobei dieses einen Eisenanteil von vorzugsweise mehr als 99,8 % hat. Ein hoher Eisengehalt ist vorteilhaft für den Wasserstoffdurchtritt durch das semipermeable Material unter Rückhaltung anderer im Pyrolysegas enthaltener Gase.

Das erfindungsgemäße Verfahren ist dabei in einer Ausführungsform eines, wie in der DE 10 2012 109 154 B4 beschrieben, z.B. in einem Wasserstoffabscheider wie dort beschrieben. Das heißt, das Abscheiden des Wasserstoffes im Wasserstoffabscheider über die semipermeable Trennwand erfolgt derart, dass für einen kurzen Zeitraum des semipermeable Material aktiviert, wie erwärmt, bzw. behandelt wird und die Maßnahmen zum Aktivieren, wie Erwärmen, nach Beginn der Diffusion nicht mehr notwendig sind, die Diffusion des Wasserstoffes durch das semipermeable Material aber weiterläuft. Diese Aktivierung, wie Erwärmung, für einen kurzen Zeitraum ist dabei ein Zeitraum zu Beginn des Verfahrens, um die Diffusion des Wasserstoffes durch das semipermeable Material zu starten. Anschließend wird die Aktivierung, wie Erwärmung, zumindest unterbrochen wenn nicht vollständig eingestellt. Diese Unterbrechung kann z.B. mindestens ein Tag, wie mehrere Tage, wie eine Woche, wie mehrere Wochen, insbesondere auch ein Monate, wie Monate sein.

Unter dem Ausdruck "semipermeables Material" oder "semipermeable Trennwand", die synonym verwendet werden, wird verstanden, dass dieses Material geeignet ist, Wasserstoff abzuscheiden, während andere Gase nicht durch dieses Material bzw. diese Trennwand durchtreten können.

Das Aktivieren, wie Erwärmen des Materials bzw. der semipermeablen Trennwand wird verstanden als ein Zuführen von Energie in Form von elektrischer Energie und/oder Wärmeenergie, insbesondere elektrischer Energie. Diese elektrische Energie kann dabei ein Gleichstrom oder Wechselstrom sein.

Unter dem Ausdruck "kurzzeitig" wird vorliegend verstanden, dass ein Aktivieren, wie Erwärmen oder Behandeln für einen Zeitraum erfolgt, der die Durchlässigkeit des semipermeablen Materials für Wasserstoff erhöht. Anschließend wird das Aktivieren, wie Erwärmen, wie oben ausgeführt, beendet. Eine Wiederholung des Aktivierens, wie Erwärmens ist nur dann notwendig, wenn z.B. die Diffusionsrate sich unter einen Schwellenwert verringert.

In einer Ausführungsform ist das erfindungsgemäße Verfahren eines, wobei während der Pyrolyse Wasserdampf in den Pyrolysereaktor eingebracht wird. Durch Einbringen des Wasserdampfes wird vorhandenes oder gebildetes Kohlenmonoxid zu Kohlendioxid und Wasserstoff umgesetzt. Hierdurch wird einerseits die Ausbeute an Wasserstoff erhöht, andererseits wird das schädliche CO in CO₂ umgewandelt.

In einer Ausführungsform ist die Pyrolyse eine durchgeführt bei einer Temperatur von mindestens 1000°C, wie von 1100°C bis 1400°C, wie 1200°C bis 1400°C, z. B. über 1200°C bis 1400°C, insbesondere 1250°C bis 1350°C. Die Pyrolyse bei hoher Temperatur, insbesondere eine der genannten Temperaturen erlaubt eine Pyrolyse des trockenen Klärschlammes, der trockenen Gärreste und/oder der trockenen Gülle unter Erzeugung eines Pyrolysegases enthaltend Wasserstoff neben unter anderem Methan, Kohlenmonoxid und Kohlendioxid sowie Stickstoff und Asche. Insbesondere schädliche organische Verbindungen werden durch Pyrolyse bei einer solch hohen Temperatur in Wasser, Wasserstoff, CO₂ und CO sowie entsprechende Stickoxide und Stickoxidgase sowie Schwefel und Schwefeloxidgase zersetzt. Die im Pyrolysereaktor entstehende Asche kann anschließend weiteren Behandlungsschritten unterworfen werden, um z.B. vorhandene Schwermetalle aus der Asche zu entfernen oder vorhandenes Phosphor zu nutzen.

Aufgrund der hohen Pyrolysetemperatur werden insbesondere auch problematische Stickoxide, die im Klärschlamm, Gärresten und/oder Gülle problematisch sind aufgrund ihrer belastenden Wirkung auf die Natur, wie z.B. Nitrateintrag auf die Felder und die Gewässer, wird in Stickstoff umgewandelt.

In einer Ausführungsform werden die Klärschlämme, Gärreste und/oder Gülle als trockene Klärschlämme, trockene Gärreste und/oder trockene Gülle bereitgestellt, wobei diese eine Trockenmasse von mindestens 80 %, wie mindestens 90 % aufweist. (Vorteil der Trocknung der Ausgangsmaterialien ist deren höherer Brennwert und damit eine Effizienzsteigerung des Prozesses.

In einer Ausführungsform wird der Klärschlamm dabei auf eine Trockenmasse von 15 % bis 20 % abgepresst und anschließend aufbereitet einschließlich Entwässerung. Dem Klärschlamm, Gärresten und/oder Gülle, die gegebenenfalls vorher getrocknet werden, weisen bei Einbringen in den Pyrolysereaktor eine Trockenmasse von mindestens 80 % auf.

In einer Ausführungsform werden der Klärschlamm, die Gärreste und/oder die Gülle mit weiteren biologischen Materialien versetzt. Diese biologischen Materialien beinhalten insbesondere Stroh, Holz einschließlich Sägemehl, und pelletiertes Holz. Entsprechend können auch Mischungen dieser biologischen Materialien eingesetzt werden. Die Zugabe dieser Materialien erlaubt die Pyrolyse zu verbessern bzw. wenn durchgeführt, die Karbonisierung und Pelletierung zu fördern. Beispiele für die biologischen Materialien sind biogene Reststoffe, wie Durchforstungsholz, Bauholz, Getreidestroh, Rapsstroh, Biogasgärreste aber auch Pferdemist und Güllefeststoffe sowie trockener Klärschlamm.

In einer Ausführungsform werden der Klärschlamm, die Gärreste und/oder die Gülle gegebenenfalls versetzt mit den weiteren biologischen Materialien vor der Pyrolyse karbonisiert und gegebenenfalls pelletiert.

Diese karbonisierten und gegebenenfalls pelletierten Ausgangsprodukte für die Pyrolyse können in Vorratsbunkern gespeichert sein. Dabei können die Ausgangsstoffe einzeln oder kombiniert und karbonisiert und/oder pelletiert eingesetzt werden.

In einer weiteren Ausführungsform des erfindungsgemäßen Verfahrens wird das Pyrolysegas erzeugt im Pyrolysereaktor dem Wasserstoffabscheider mit Überdruck zugeführt und/oder im sekundären Bereich des Wasserstoffabscheiders ein Unterdruck angelegt.

Durch Einbringen mit Überdruck bzw. aufgrund des Unterdrucks im sekundären Bereich des Wasserstoffabscheiders, ist die Abreicherung des Pyrolysegases an Wasserstoff und Anreichung des Wasserstoffes im sekundären Bereich besonders gut.

Der Wasserstoffabscheider bzw. die zuführenden und abführenden Leitungen sind entsprechend mit Einrichtungen zum Erzeugen von Überdruck und/oder Unterdruck ausgerüstet.

In einer weiteren Ausführungsform ist das erfindungsgemäße Verfahren eines, bei dem das verbliebene Pyrolysegas nach Wasserstoffabtrennung einer weiteren Verwertung zugeführt wird, z.B. zur Verbrennung in einem Blockheizkraftwerk. Das verbleibende Pyrolysegas, auch als Magergas bezeichnet, enthält unter anderem Methan, Restanteile von CO und H₂, N₂, CO₂ etc. Diese Gase erlauben die Generierung von Wärme und elektrischer Energie. Die verbleibenden Abgase können gegebenenfalls weiter aufgereinigt werden z.B. durch Separation von Kohlendioxid um anschließend an die Umwelt abgegeben zu werden.

In einer weiteren Ausführungsform ist das erfindungsgemäße Verfahren eines, wobei in der verbleibenden Asche nach der Pyrolyse gegebenenfalls vorhandene Schwermetalle durch Säureaufschluss entfernt werden. Dem Fachmann sind die üblichen Verfahren zum Säureaufschluss und Ausfällen von möglichen Schwermetallen bekannten.

Darüber hinaus kann weiterhin in der Asche vorhandenes Phosphor insbesondere nach Entfernen der Schwermetalle als Dünger verwendet werden. Hierzu ist gegebenenfalls ein Umwandeln des Phosphor in pflanzenverfügbares Phosphat notwendig.

Das Verfahren gemäß der vorliegenden Erfindung umfasst dabei in einer Ausführungsform weiterhin, dass das nach Pyrolyse erhaltene Pyrolysegas einer Kühlung z.B. im Rahmen eines Wärmetauschers (Gaskühlers) und/oder einer Reinigung z.B. mittels Gaswäsche unterworfen wird. Dadurch können in Pyrolysegas vorhandene Feststoffe gegebenenfalls mit einem Feststofffilter entfernt werden, Wärme zurückgewonnen werden z.B. um Abluft zu behandeln aber auch gegebenenfalls vorhandene Gase aus dem Pyrolysegas vor dem Abscheiden des Wasserstoffes entfernt werden.

Dem Fachmann sind geeignete Verfahren hierzu bekannt. In einer Ausführungsform ist das Verfahren zur Aufarbeitung von Klärschlamm, Gärresten und/oder Gülle gemäß der vorliegenden Erfindung eines, wobei die semipermeable Trennwand im Wasserstoffabscheider eine ist bestehend aus ferritischem Eisen und/oder Roheisen und/oder Reineisen.

Der erfindungsgemäß gewonnene Wasserstoff kann vielfältig eingesetzt werden. So kann er in stationären oder mobilen Brennstoffzellanlagen elektrischen Strom generieren und insgesamt als Energieträger in verschiedensten Bereichen eingesetzt werden. Der erhaltene Wasserstoff ist dabei ein sogenannter grüner Wasserstoff, d.h. mit Hilfe eines nachhaltigen Verfahrens gewonnen. Wasserstoff eignet sich z.B. in flüssiger Form sehr gut zur Lagerung als Energieträger. Als Energieträger kann er in verschiedenen Bereichen wie Verkehr verwendet werden, aber auch in anderen gewerblichen und industriellen Produktionsprozessen. So kann es als alternatives Reduktionsmittel statt Kohlenstoff für die Stahlerzeugung verwendet werden Insbesondere lässt sich Wasserstoff auch hervorragend über längere Strecken z.B. in flüssiger Form transportieren.

In einem weiteren Aspekt wird eine Anlage zur Aufarbeitung von Klärschlamm, Gärresten und/oder Gülle bereitgestellt. Diese Anlage ist insbesondere geeignet zur Durchführung des erfindungsgemäßen Verfahrens. Die erfindungsgemäße Anlage ist dabei eine mit einer ersten Einrichtung zur Aufarbeitung des Klärschlammes, der Gärreste und/oder der Gülle auf ein Material mit mindestens 80 % Trockenmasse, wie mindestens 90 % Trockenmasse. Gegebenenfalls ist eine Karbonisierungseinheit des genannten Materials mit mindestens 80 % Trockenmasse, wie mindestens 90 % Trockenmasse vorhanden. Darüber hinaus weist die erfindungsgemäße Anlage einen Pyrolysereaktor zur Pyrolyse des getrockneten und gegebenenfalls karbonisierten Klärschlammes, Gärrestes und/oder der Gülle zur Erzeugung von Pyrolysegas auf. Weiterhin umfasst diese Anlage einen Wasserstoffabscheider mit einem semipermeablen Material als Trennwand das zwischen dem primären Pyrolysegas des enthaltenen Bereiches und des sekundären Wasserstoffes angereicherten Bereich angeordnet ist, dieses semipermeable Material ist eines, das ferritisches Eisen und/oder Roheisen und/oder Reineisen umfasst. In einer Ausführungsform ist dieses semipermeable Material als semipermeable Trennwand aus ferritischem Eisen und/oder Roheisen und/oder Reineisen.

Die Anlage kann dabei als eine Vorrichtung aufgebaut sein oder örtlich getrennt in verschiedenen Vorrichtungen vorliegen.

In einer Ausführungsform ist die Anlage dabei eine, wobei der Pyrolysereaktor eine Einrichtung zum Einbringen von Wasserdampf aufweist. Diese Einrichtung zum Einbringen von Wasserdampf erlaubt den Anteil von CO zu CO₂ und H₂ im Pyrolysegas zu verändern. Der Wasserdampf wird mit bekannten Mitteln in den Reaktor eingebracht.

Weiterhin weist die erfindungsgemäße Anlage in einer Ausführungsform eine Vakuumpumpe zum Anlegen eines Unterdrucks im sekundären Bereich der Wasserstoffanreicherung also im Bereich des Wasserstoffabscheiders auf und/oder eine Pumpe zum Anlegen eines Überdrucks im das Pyrolysegas aufweisenden primären Bereich des Wasserstoffabscheiders.

Diese Mittel insbesondere in Form von Vakuumpumpe und Pumpe sind entsprechend im Zulauf oder Ablauf des primären oder sekundären Bereiches angeordnet.

In einer weiteren Ausführungsform gemäß der vorliegenden Erfindung ist die Anlage eine, die weiterhin eine Verbrennungskraftmaschine zur Erzeugung von Energie aus dem wasserstoffabgereicherten Pyrolysegas erlaubt. Zum Beispiel kann das abgereicherte Pyrolysegas zu einem Magergasblockheizkraftwerk geleitet werden, wo anschließend die Verbrennung stattfindet. Die Abgase können gegebenenfalls dann zu einer entsprechenden Einheit zur Separation von Kohlendioxid geleitet werden.

In einer Ausführungsform ist die erfindungsgemäße Anlage somit eine ausgebildet als Kleinkraftwerk zur Gewinnung von Wasserstoff und Energie aus Klärschlamm, Gärresten und/oder Gülle.

Die Anlage ist insbesondere auch geeignet als dezentrales Kleinkraftwerk. In einer Ausführungsform ist die erfindungsgemäße Anlage eine, die weiterhin eine Einrichtung zur Abtrennung von Schwermetallen aus der im Pyrolysereaktor erhaltenen Asche erlaubt. Gegebenenfalls weist diese Einrichtung zur Abtrennung von Schwermetallen aus der Asche eine entsprechende Einrichtung zur Aufbewahrung und Einbringung von Säure zum Säureaufschluss auf.

Schließlich wird erfindungsgemäß die Verwendung von Klärschlamm, Gärresten und/oder Gülle zur Gewinnung von hochreinem Wasserstoff insbesondere mit einem Wasserstoffabscheider mit einem semipermeablen Material als Trennwand zwischen dem primären Bereich enthaltenen wasserstoffhaltigen Gas und dem sekundären Bereich mit wasserstoffangereichertem Gas auf.

Die erfindungsgemäße Anlage kann darüber hinaus übliche Einrichtungen aufweisen, z.B. Gaskühler, Gaswäscher etc., um das Pyrolysegas oder andere erhaltene Gase aufzubereiten bzw. den abgeschiedenen Wasserstoff weiter zu prozessieren. Die Vorrichtung kann darüber hinaus Steuer-, Regel- und Messeinheit(en) mit entsprechenden Sensoren umfassen. Diese Einheiten steuern und regeln die entsprechende Zufuhr und Ableitung der Klärschlamm, Gärrest oder Gülle enthaltenen Ausgangsmaterialien, des Pyrolysegases sowie des abgetrennten Wasserstoffes.

Bevorzugte Ausführungsbeispiele der Erfindung werden nachfolgend anhand der Zeichnung näher erläutert. Hierbei zeigt die Figur folgendes:

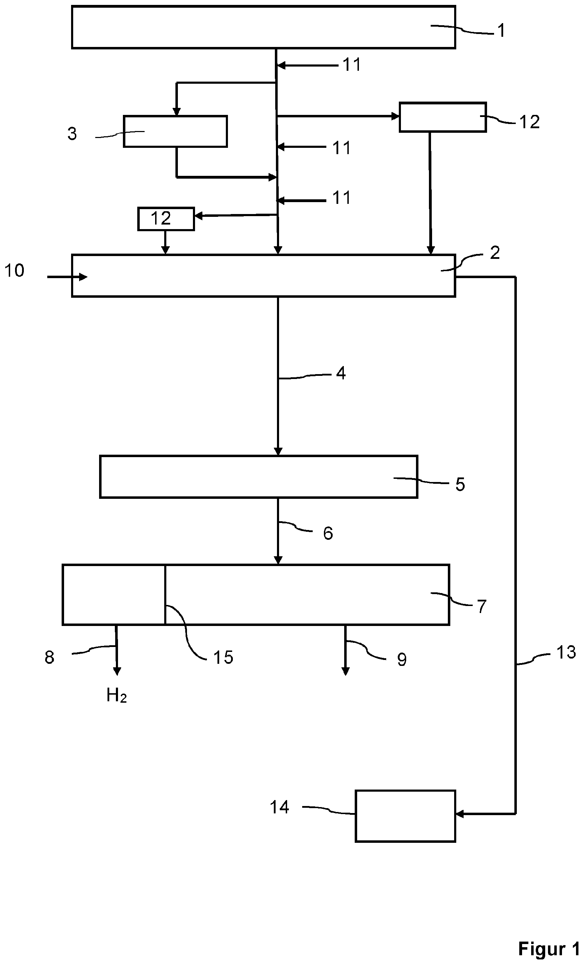

- Figur 1: zeigt ein Fließdiagramm des erfindungsgemäßen Verfahrens.

### Beschreibung der Figur 1

Die Figur 1 zeigt ein Fließdiagramm des erfindungsgemäßen Verfahrens. Das erfindungsgemäße Verfahren umfasst im ersten Schritt das Bereitstellen von Klärschlamm, Gärresten und/oder Gülle, 1. Diese wird zu dem Pyrolysereaktor 2 zugeführt. Während des Zuführens des Ausgangsmaterials kann dieses vorher in einem Trocknungsschritt 3 getrocknet werden. In einer Ausführungsform ist dabei die Trockenmasse der bereitgestellten Gärreste, Gülle und Klärschlamm bei mindestens 80 %.

Gegebenenfalls kann weiterhin weiteres biologisches Material zu dem Klärschlamm, Gärresten und/oder Gülle hinzugefügt werden, 11. Dieses Hinzufügen kann vor oder nach einer optionalen Trocknung 3 erfolgen. Schließlich kann mit oder ohne Trocknung und mit oder ohne Zugabe zusätzlicher biologischer Materialien eine Karbonisierung und/oder Pelletierung des Ausgangsmaterials umfassend Klärschlamm, Gärreste und/oder Gülle erfolgen, 12. Diese Ausgangsmaterialien werden dann in entsprechender Form dem Pyrolysereaktor 2 geleitet. Gegebenenfalls kann Wasserdampf 10 in dem Pyrolysereaktor eingebracht werden. Im Pyrolysereaktor 2 erfolgt die Pyrolyse der entsprechenden trockenen Ausgangsmaterialien die z.B. vorab karbonisiert und/oder pelletiert gegebenenfalls unter Einbringung weiterer biologischer Materialien behandelt wurden. Das Einbringen des Wasserdampfes führt zu einer Verschiebung des Gleichgewichts in der Herstellung von CO und CO₂, sodass entsprechend mehr CO₂ und weniger CO und zusätzlicher Wasserstoff entsteht. Das Pyrolysegas 4 wird dann über ein entsprechendes Leitungssystem 5 als Pyrolysegas 6 zugeführt. Das Pyrolysegas kann dabei gegebenenfalls im Leitungssystem 5 durch einen Gaskühler oder einen Gaswäscher geführt werden.

Das so behandelten Pyrolysegas 6 wird in den Wasserstoffabscheider 7 eingebracht. Dieser Wasserstoffabscheider 7 weist einen Primärbereich und einen Sekundärbereich auf, wobei diese beiden Bereiche mit einer semipermeablen Trennwand 15 mit ferritischem Eisen und/oder Roheisen und/oder Reineisen ausgebildet ist. Das Pyrolysegas wird in dem primären Bereich des Wasserstoffabscheiders eingebracht, Wasserstoff kann über die semipermeable Trennwand 15 in den Sekundärbereich übertreten. Der aufgereinigte Wasserstoff, insbesondere hochreiner Wasserstoff wird dann über die Ableitung 8 aus dem Wasserstoffabscheider abgeleitet. Verbleibendes Pyrolysegas, auch als mageres Pyrolysegas bezeichnet, 9, wird der weiteren Nutzung zugeführt, z.B. zur weiteren Verbrennung. Im Pyrolysereaktor 2 entstandene Asche 13 kann einem Aufschluss in einer Aufschlusseinheit 14 zugeführt werden.

Mit Hilfe des Fließdiagramms gemäß Abbildung 1 wurde das erfindungsgemäße Verfahren näher erläutert, ohne auf dieses beschränkt zu sein.

## Patentansprüche

1. Verfahren zur Aufarbeitung von Klärschlamm, Gärresten und/oder Gülle unter Gewinnung von Wasserstoff umfassend die Schritte:
- Bereitstellen von Klärschlamm, Gärresten und/oder Gülle mit gegebenenfalls vorheriger Trocknung hiervon;
- Pyrolyse des trockenen Klärschlammes, der trockenen Gärreste und/oder der trockenen Gülle in einem Pyrolysereaktor zur Erzeugung von Pyrolysegas enthaltend Wasserstoff;
- Führen des erhaltenen, Wasserstoff enthaltenden Pyrolysegases zu einem Wasserstoffabscheider;
- Abtrennen von Wasserstoff in den Wasserstoffabscheider, wobei dieser Wasserstoffabscheider einer ist mit einer semipermeablen Trennwand mit ferritischem Eisen und/oder Roheisen und/oder Reineisen zwischen dem primären Bereich mit dem Pyrolysegas und dem sekundären, Wasserstoff angereicherten Bereich.

2. Verfahren zur Aufarbeitung von Klärschlamm, Gärresten und/oder Gülle zur Gewinnung von Wasserstoff nach Anspruch 1, wobei während der Pyrolyse Wasserdampf in den Pyrolysereaktor eingebracht wird.

3. Verfahren zur Aufarbeitung von Klärschlamm, Gärresten und/oder Gülle nach einem der vorherigen Ansprüche, wobei die Pyrolyse bei einer Temperatur von 1100°C bis 1400°C erfolgt, wie 1200°C bis 1400°C.

4. Verfahren zur Aufarbeitung von Klärschlamm, Gärresten und/oder Gülle nach einem der vorherigen Ansprüche, wobei der trockene Klärschlamm, die trockenen Gärreste und die trockene Gülle eine Trockenmasse von mindestens 80 %, wie mindestens 90 % aufweist.

5. Verfahren zur Aufarbeitung von Klärschlamm, Gärresten und/oder Gülle nach einem der vorherigen Ansprüche, wobei der Klärschlamm, die Gärreste und/oder die Gülle mit weiteren biologischen Materialien versetzt werden, insbesondere Stroh, Holz einschließlich Sägemehl und pelletiertes Holz.

6. Verfahren zur Aufarbeitung von Klärschlamm, Gärresten und/oder Gülle nach einem der vorherigen Ansprüche, wobei diese vor der Pyrolyse ggf. unter vorherigem Zusatz der weiteren Materialien gemäß Anspruch 5 karbonisiert und gegebenenfalls pelletiert werden.

7. Verfahren zur Aufarbeitung von Klärschlamm, Gärresten und/oder Gülle nach einem der vorherigen Verfahren, wobei das Pyrolysegas dem Wasserstoffabscheider mit Überdruck zugeführt wird und/oder im sekundären Bereich ein Unterdruck angelegt wird.

8. Verfahren zur Aufarbeitung von Klärschlamm, Gärresten und/oder Gülle nach einem der vorherigen Ansprüche, wobei in der Asche nach der Pyrolyse ggf. vorhandene Schwermetalle durch Säureaufschluss entfernt werden und/oder wobei das nach Pyrolyse erhaltene Pyrolyse-Gas einer Kühlung zum Beispiel im Rahmen eines Gaskühlersund/oder einer Gaswäsche unterzogen wird.

9. Verfahren zur Aufarbeitung von Klärschlamm, Gärresten und/oder Gülle nach einem der vorherigen Ansprüche, wobei die semipermeable Trennwand im Wasserstoffabscheider eine ist bestehend aus ferritischem Eisen und/oder Roheisen und/oder Reineisen.

10. Anlage zur Aufarbeitung von Klärschlamm, Gärresten und/oder Gülle, insbesondere zur Durchführung eines Verfahrens nach einem der Ansprüche 1 bis 9 mit einer ersten Einrichtung zur Aufarbeitung des Klärschlammes, der Gärreste und/oder der Gülle auf ein Material mit mindestens 80 % Trockenmasse, wie mindestens 90 % Trockenmasse, ggf. mit einer Karbonisierungseinheit des Materials; einem Pyrolysereaktor zur Pyrolyse des getrockneten und ggf. karbonisierten Klärschlammes, Gärrest und/oder Gülle zur Erzeugung von Pyrolysegas; einem Wasserstoffabscheider mit einem semipermeablen Material als Trennwand das zwischen dem primären Pyrolysegas des enthaltenden Bereichs und dem sekundären Wasserstoff angereicherten Bereich angeordnet ist, wobei dieses semipermeable Material eines ist, das ferritisches Eisen und/oder Roheisen und/oder Reineisen umfasst, bevorzugt aus ferritischem Eisen und/oder Roheisen und/oder Reineisen besteht.

11. Anlage zur Aufarbeitung von Klärschlamm, Gärresten und/oder Gülle nach Anspruch 10, wobei der Pyrolysereaktor eine Einrichtung zum Einbringen von Wasserdampf aufweist.

12. Anlage zur Aufarbeitung von Klärschlamm, Gärresten und/oder Gülle nach einem der Ansprüche 10 oder 11, i) weiterhin aufweisend eine Vakuumpumpe zum Anlegen eines Unterdrucks im sekundären Bereich des Wasserstoffabscheiders und/oder eine Pumpe zum Anlegen eines Überdruckes im das Pyrolysegas aufweisenden primären Bereich des Wasserstoffabscheiders und/oder ii) weiterhin aufweisend eine Verbrennungskraftmaschine zur Erzeugung von Energie aus dem Wasserstoff abgereicherten Pyrolysegas und/oder iii) weiter umfassend eine Einheit zur Kohlendioxidseparation aus dem Wasserstoff abgereicherten Pyrolysegas.

13. Anlage nach einem der Ansprüche 10 bis 12 als Kleinkraftwerk zur Gewinnung von Wasserstoff und Energie aus Klärschlamm, Gärresten und/oder Gülle.

14. Anlage gemäß einem der Ansprüche 10 bis 13 mit einer Einrichtung zur Abtrennung von Schwermetallen aus der im Pyrolysereaktor erhaltenen Asche.

15. Verwendung von Klärschlamm, Gärresten und/oder Gülle zur Gewinnung von hochreinem Wasserstoff, insbesondere mit einem Wasserstoffabscheider mit einem semipermeablen Material als Trennwand zwischen dem primären Bereich enthaltend wasserstoffhaltiges Gas und dem sekundären Bereich mit Wasserstoff angereichertem Gas.
